# EUROPÄISCHE PATENTSCHRIFT

(11) **EP 0 731 120 B1**
(45) Veröffentlichungstag und Bekanntmachung des Hinweises auf die Patenterteilung: **11.09.2002**
(21) Anmeldenummer: 96102795.0
(22) Anmeldetag: 24.02.1996
(51) Int. Cl.: C08G 18/66, C08G 18/48, C08G 18/40

(54) **Verfahren zur Herstellung von hochelastischen Polyurethanschaumstoffen**
Process for the preparation of highly elastic polyurethane foams
Procédé de préparation de mousses de polyuréthane à grande élasticité

(30) Priorität: 08.03.1995 DE 19508079
(43) Veröffentlichungstag der Anmeldung: 11.09.1996
(73) Patentinhaber: BAYER AG, 51368 Leverkusen (DE)
(72) Erfinder: Hettel, Hans, Dr., 51503 Rösrath (DE); Haas, Peter, Dr., 42781 Haan (DE)

(56) Entgegenhaltungen:
- EP-A- 0 547 764
- EP-A- 0 549 120
- FR-A- 2 134 165
- FR-A- 2 268 036
- US-A- 4 239 856

## Beschreibung

Die Herstellung hochelastischer (HR)-Polyurethanschaumstoffe verläuft gemäß dem Stand der Technik nach prinzipiell zwei unterschiedlichen Verfahren bezüglich der eingesetzten Ausgangsprodukte.

So werden einerseits modifizierte Isocyanate, d.h. Isocyanate, die durch zusätzliche Umsetzungsschritte Urethan-, Harnstoff-, Biuret- oder Allophanatgruppen enthalten, mit aktiven Polyolen zur Reaktion gebracht.

Zum anderen werden Isocyanate vom TDI- oder MDI-Typ mit "modifizierten" Polyolen zur Umsetzung gebracht, um HR-Schaumstoffe herzustellen.

Die Dokumente EP-A- 0 547 764, EP-A-0 549 120, FR-A- 2 134 165 und FR-A- 2 268 036 beschreiben elastische Polyurethanschaumstoffe. Jedoch werden bei der Herstellung der Polyetherpolyole keine Ester-, Urethan- oder Harnstoffgruppen eingegügt.

Unter "modifizierten" Polyolen sind organische Füllstoffe enthaltende Polyol-Dispersionen zu verstehen. Beispiele hierfür sind
a) Polyharnstoffgruppen enthaltende Polyole, die durch Umsetzung von Diaminen und Diisocyanaten in Gegenwart der Polyole erhalten werden (PHD-Polyole),
b) durch geeignete Monomere wie Styrol und Acrylnitril gepfropfte Polyoldispersionen (SAN-Polyole),
c) Urethangruppen enthaltende Polyoldispersionen, die durch Umsetzung von Alkanolaminen und Diisocyanaten in der Polyolkomponente erhalten werden (PIPA-Polyole).

Der für die Prozeßsicherheit bei der Schaumstoffherstellung erforderliche Füllgrad liegt zwischen 10 und 20 Gew.-%. Beispiele dafür sind im Kapitel "Rohstoffe" des Kunststoffhandbuches Polyurethane Band 7, herausgegeben von Becker/Braun aufgeführt.

Diese Füllstoffe erhöhen immer die Härte der Polyurethanschaumstoffe und bewirken eine Verschlechterung von Elastizität sowie der Druckverformungseigenschaften.

Durch Verwendung von Treibmitteln vom Typ der früher verwendeten und jetzt nicht mehr zulässigen Fluorchlorkohlenwasserstoffe wie Fluortrichlormethan (R11) konnten diese Nachteile auch im Bereich niedriger Rohdichten und weicher Typen umgangen werden. Bei alleiniger Verwendung von Wasser als Treibmittel werden die schlechten mechanischen Eigenschaften jedoch noch verstärkt.

Die Herstellung von HR-Schaumstoffen mittels Füllstoff-freier Polyole und nichtmodifizierter Isocyanate gelang bisher wegen mangelnder Prozeßsicherheit nicht.

Aufgabe der vorliegenden Erfindung war daher die Bereitstellung eines Verfahrens zur Herstellung von Polyurethan-HR-Schaumstoffen auf der Basis von Polyolen ohne Füllstoffe und nicht modifizierten Polyisocyanaten.

Überraschend gelingt die Lösung dieser Aufgabe durch Umsetzung von Polyisocyanaten mit speziellen höherfunktionellen Polyolen.

Gegenstand der Erfindung ist ein Verfahren zur Herstellung hochelastischer Polyurethanschaumstoffe durch Umsetzung von
A) Polyisocyanaten mit
B) Verbindungen mit mindestens zwei gegenüber Isocyanaten reaktionsfähigen Wasserstoffatomen von einem Molekulargewicht von 500 bis 10 000 und
C) Verbindungen der allgemeinen Formel 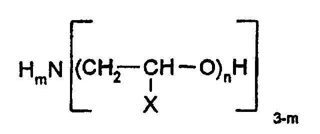 in welcher
   - m: eine ganze Zahl zwischen 0 und 2
   - n: eine ganze Zahl zwischen 1 und 3
   - x: Wasserstoff oder eine Methylgruppen bedeutet, und gegebenenfalls

   C1) weiteren Verbindungen mit mindestens zwei gegenüber Isocyanaten reaktionsfähigen Wasserstoffatomen und einem Molekulargewicht von 32 bis 499 in Gegenwart von
D) Wasser und/oder leicht flüchtigen organischen Treibmitteln sowie gegebenenfalls in Gegenwart von
E) füllstoffhaltigen Polyolen vom Typ der SAN-, PHD- und PIPA-Polyole und
F) an sich bekannten Hilfs- und Zusatzmitteln,
dadurch gekennzeichnet, daß als Komponente B) ein Polyolgemisch verwendet wird, das
B1) mindestens ein Polyetherpolyol der Funktionalität 3,5 bis 8, bevorzugt 4 bis 8, besonders bevorzugt 5 bis 7, mit überwiegend primären OH-Gruppen sowie einem Ethylenoxidgehalt von 10 bis 30 Gew.-%, bevorzugt 15 bis 25 Gew.-%, sowie einem Äquivalentgewicht von 500 bis 4 000 und
B2) mindestens ein Ester-, Urethan-, und/oder Harnstoffgruppen enthaltendes Polyetherpolyol der Funktionalität 2 bis 8, bevorzugt 3 bis 6, mit überwiegend primären OH-Gruppen und einem Ethylenoxidgehalt von 50 bis 95 Gew.-% sowie einem Äquivalentgewicht von 200 bis 3 000, bevorzugt 250 bis 2 500 enthält.

Erfindungsgemäß ist bevorzugt, daß
- als Starter für die Polyole B1) solche der Funktionalität 3,5 bis 8, bevorzugt 4 bis 8, besonders bevorzugt 5 bis 7, verwendet werden,
- die Polyole B2) eine Funktionalität von 3 bis 8, bevorzugt 4 bis 6, haben,
- die Polyole B1) in Mengen von 80 bis 99, bevorzugt 90 bis 99 Gew.-% und die Polyole B2) in Mengen von 1 bis 20, bevorzugt 1 bis 10 Gew.-%, bezogen auf die Komponente B) verwendet werden,
- zur Härtesteigerung des Schaumstoffs Füllstoffpolyole E) mitverwendet werden,
- als Komponente C) Vernetzer vom Typ der Alkanolamine mitverwendet werden.

Die Erfindung betrifft auch Füllstoff-freie weiche, hochelastische Polyurethanschaumstoffe, die nach dem erfindungsgemäßen Verfahren erhältlich sind.

Für die Herstellung der Polyurethanschaumstoffe werden als Ausgangskomponenten eingesetzt:
A) aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ,

   in der
   - n: 2 bis 4, vorzugsweise 2, und
   - Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten, z.B. solche Polyisocyanate, wie sie in der DE-OS 28 32 253, Seiten 10 bis 11, beschrieben werden.

Besonders bevorzugt werden in der Regel die technisch leicht zugänglichen nicht weiter modifizierten Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI"). Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten können mitverwendet werden. Ihre Anwesenheit ist jedoch nicht verfahrensspezifisch.
B) Die Polyolkomponente, mit der die Polyisocyanatkomponente A) umgesetzt wird, enthält
   B1) mindestens ein Polyetherpolyol der Funktionalität 3,5 bis 8, bevorzugt 4 bis 8, besonders bevorzugt 5 bis 7, mit überwiegend primären OH-Gruppen sowie einem Ethylenoxidgehalt von 10 bis 30 Gew.-%, bevorzugt 15 bis 25 Gew.-%, sowie einem Äquivalentgewicht von 500 bis 4 000 und
   B2) mindestens ein Polyetherpolyol der Funktionalität 2 bis 8, bevorzugt 3 bis 6, mit überwiegend primären OH-Gruppen und einem Ethylenoxidgehalt von 50 bis 95 Gew.-% sowie einem Äquivalentgewicht von 200 bis 3 000, bevorzugt 250 bis 2 500.
   Bei den Polyetherpolyolen B1) und B2) handelt es sich um in der Polyurethanchemie an sich bekannte Verbindungen.
C) Beispiele für Verbindungen der oben genannten allgemeinen Formel sind z.B. Vernetzer vom Typ der Alkanolamine wie Diethanolamin, Diisopropanolamin, Triethanolamin, Triisopropanolamin 2-(Hydroxyethyl)-bis-α-(hydroxypropyl)-amin, Bis-[2-hydroxyethoxy)-ethyl]-amin.
   C1) Ausgangskomponenten sind gegebenenfalls weitere Verbindungen mit mindestens zwei gegenüber Isocyanaten reaktionsfähigen Wasserstoffatomen und einem Molekulargewicht von 32 bis 499. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19 bis 20, beschrieben.

D) Als Treibmittel werden Wasser und/oder an sich bekannte leichtsiedende organische Verbindungen verwendet.
   Als leichtsiedende organische Verbindungen kommen insbesondere C₁-C₆-Kohlenwasserstoffe wie n- und/oder i-Pentan, Cyclopentan, Hexan und/oder auch Hydrofluoralkane wie 1,1,1,4,4,4-Hexafluorbutan oder 1,1,1,3,3,1,1,1,3,3,-Pentafluorpropan in Betracht.
E) Gegebenenfalls werden dispergierte organische Füllstoffe enthaltende Polyole an sich bekannter Art mitverwendet. Erfindungsgemäß bevorzugte Beispiele hierfür sind:
   a) Polyharnstoffgruppen enthaltende Polyole, die durch Umsetzung von Diaminen und Diisocyanaten in Gegenwart der Polyole erhalten werden (PHD-Polyole),
   b) durch geeignete Monomere wie Styrol und Acrylnitril gepfropfte Polyoldispersionen (SAN-Polyole),
   c) Urethangruppen enthaltende Polyoldispersionen, die durch Umsetzung von Alkanolaminen und Diisocyanaten in der Polyolkomponente erhalten werden (PIPA-Polyole).
F) Gegebenenfalls mitverwendet werden an sich bekannte Hilfs- und Zusatzstoffe, wie Emulgatoren, Schaumstabilisatoren und Flammschutzmittel. Als Emulgatoren sind solche auf Basis alkoxylierter Fettsäuren und höhere Alkohole bevorzugt.

Als Schaumstabilisatoren kommen vor allem Polyethersiloxane, bevorzugt wasserunlösliche Vertreter, in Frage. Diese Verbindungen sind im allgemeinen so aufgebaut, daß ein kürzer kettiges Copolymerisat aus Ethylenoxid und Propylenoxid mit einem Polydimethylsiloxanrest verbunden ist. Derartige Schaumstabilisatoren sind z.B. in den US-PS 28 34 748, 29 17 480 und 36 29 308 sowie US-PS 29 17 480 beschrieben. Auch die aus der Polyurethanchemie an sich bekannten Katalysatoren wie tert.-Amine und/oder metallorganische Verbindungen können mitverwendet werden.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z.B. auf den Seiten 103 bis 113 beschrieben.

### Herstellung der Schaumstoffe:

Die Reaktionskomponenten werden erfindungsgemäß nach dem an sich bekannten Einstufenverfahren, dem Präpolymerverfahren oder dem Semipräpolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die Umsetzung erfolgt in der Regel in einem Kennzahlbereich von 90 bis 130.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage.

In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern erhält. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt.

Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 31 78 490 und 31 82 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 21 21 670 und 23 07 589 bekanntgeworden sind.

Bevorzugt werden aber die Schaumstoffe durch Blockverschäumung hergestellt.

Durch die erfindungsgemäße Kombination der Polyetherpolyole B1) und B2) gelingt die Herstellung von HR-Schaumstoffen ohne Verwendung modifizierter Isocyanate oder von Füllstoffpolyolen. Das erfindungsgemäße Verfahren erlaubt es zudem, Schaumstoffe mit höherer Elastizität, besserem Rückstellvermögen sowie geringeren Härtegraden herzustellen, und zwar auf der Basis von Wasser als Treibmittel. Hierdurch werden Rohdichten und Härteprofile erreicht, die früher nur in Kombination Füllstoffdispersion/Isocyanat/Wasser/R11 (R 11 = Monfluortrichlormethan) bzw. Polyetherpolyol/mod. Isocyanat/Wasser/R11 erhältlich waren. Der Bereich höherer Stauchhärten läßt sich durch Mitverwendung von Härtevernetzern und/oder anteilige Mitverwendung der Polyolkomponente E) abdecken.

Das erfindungsgemäße Verfahren ist insofern überraschend, da es stark vom Aufbau der Polyole B) abhängt. So sind z.B. trifunktionelle Polyole B1) nicht zum Aufbau dieser Schaumstoffe geeignet. Erst durch den Übergang zur Funktionalität von 6 wird ein problemloses Processing zwischen In- und Überstabilität erreicht. Ein befürchteter hoher und frühzeitiger Aufbau der Viskosität mit schlechtem Fließ- und Steigverhalten tritt überraschenderweise nicht auf.

Die Ethylenoxid-reiche Komponente B2) kann neben Propylenoxid auch C4- und C6-Ethereinheiten sowie Ester-, Urethan- und Harnstoffgruppen enthalten. Bevorzugt sind solche Polyole B2), deren Funktionalität 3 bis 6 beträgt und die zusätzlich Ester-, Urethan- oder Harnstoffgruppen enthalten, da diese im Sinne dieses Verfahrens besonders effektiv sind.

### Beschreibung der Polyolkomponenten B)

### Polyetherpolyol B1

Polyetherpolyol der OH-Zahl 28 mit einem Gehalt von 18 % Ethylenoxid und 82 % Propylenoxid, sowie Sorbit als Starter. Die Funktionalität beträgt 6 und der Gehalt an primären OH-Gruppen 90 %, Äquivalentgewicht 2 000;

### Polyetherpolyol B2

1. Polyetherpolyol der OH-Zahl 36 mit einem Gehalt von 72 % Ethylenoxid und 18 % Propylenoxid gestartet auf Glycerin. Die Funktionalität ist 3 und der Gehalt an primären OH-Gruppen beträgt 90 %, Äquivalentgewicht 1558.
2. Polyetherpolyol der OH-Zahl 100 mit einem Gehalt von 80 % Ethylenoxid und 20 % Propylenoxid gestartet auf Sorbit. Die Funktionalität ist 6 und der Gehalt an primären OH-Gruppen beträgt 90 %, Äquivalentgewicht 561.
3. Polyetherpolyol der OH-Zahl 150, hergestellt durch Veresterung eines Polyols aus 95 Gew.-% Ethylenoxid und 5 Gew.-% Propylenoxid sowie Trimethylolpropan als Starter mit einer OH-Zahl von 250 mit Adipinsäure. Die mittlere Funktionalität beträgt 4, das Äquivalentgewicht 374.
4. Polyetherpolyol der OH-Zahl 148, hergestellt durch Umsetzung eines Polyols aus 95 Gew.-% Ethylenoxid und 5 Gew.-% Propylenoxid sowie Trimethylolpropan als Starter mit einer OH-Zahl von 250 mit Hexamethylendiisocyanat. Die mittlere Funktionalität beträgt 4, das Äquivalentgewicht 379.

### Polyetherpolyol E (Vergleich)

1. Füllstoffpolyol der OH-Zahl 30 einer 10 % gew.-%igen Polyharnstoffdispersion aus Toluylendiisocyanat und Hydrazin in einem aktiven Polyetherpolyol aus Trimethylolpropan, Propylenoxid und Ethylenoxid, Äquivalentgewicht 1870;

### Ausführungsbeispiele

Unter den üblichen Bedingungen der Schaumstoffherstellung nach dem Einstufenverfahren werden zur Reaktion gebracht:

### Beispiel 1

| | Gew.-Teile |
|---|---|
| Polyetherpolyol B1 | 95 |
| Polyetherpolyol B2/1 | 5,0 |
| Stabilisator KS 67 der Bayer AG | 0,5 |
| Diethanolamin (Komponente C) | 2,0 |
| Dabco® 33LV | 0,15 |
| Zinnoctoat | 0,15 |
| Wasser | 4,5 |
| Desmodur® T 80 der Bayer AG | 47,6 |
| (Gemisch aus 20 Gew.-% 2,6- und 80 Gew.-% 2,4-Toluylendiisocyanat) | |

Es resultiert ein hochelastischer weicher Schaumstoff, der nach dem Aufdrücken folgende Eigenschaften hat:

| | |
|---|---|
| Rohdichte | 22,0 kg/m³ |
| Stauchhärte | 0,8 kPa |
| Bruchdehnung | 60 % |
| Zugfestigkeit | 100 kPa |
| Rückprallelastizität | 56 % |
| Druckverformungsrest (DVR) (90 %) | 9 % |

Dieser Schaumstofftyp wurde früher mit 10 %igem Füllstoffpolyol in Kombination mit 3,0 Teilen Wasser und 15 Teilen R11 hergestellt.

### Beispiel 2

| | Gew.-Teile |
|---|---|
| Polyetherpolyol B1 | 97,5 |
| Polyetherpolyol B2/2 | 2,5 |
| Stabilisator KS 67 | 0,5 |
| Diethanolamin (Komponente C) | 1,0 |
| Dabco® 33LV | 0,15 |
| Zinnoctoat | 0,15 |
| Wasser | 4,5 |
| Desmodur® T 80 | 45,2 |

Eigenschaften des HR-Schaumstoffs:

| | |
|---|---|
| Rohdichte | 21,5 kg/m³ |
| Stauchhärte | 0,9 kPa |
| Bruchdehnung | 60 % |
| Zugfestigkeit | 100 kPa |
| Rückprallelastizität | 58 % |
| DVR (90 %) | 7,5 % |

### Beispiel 3

| | Gew.-Teile |
|---|---|
| Polyetherpolyol B1 | 97,5 |
| Polyetherpolyol B2/3 | 2,5 |
| Stabilisator KS 67 | 0,5 |
| Diethanolamin (Komponente C) | 1,0 |
| Dabco® 33LV | 0,15 |
| Zinnoctoat | 0,15 |
| Wasser | 4,5 |
| Desmodur® T 80 | 45,2 |

Eigenschaften des HR-Schaumstoffs:

| | |
|---|---|
| Rohdichte | 21,5 kg/m³ |
| Stauchhärte | 0,95 kPa |
| Bruchdehnung | 65 % |
| Zugfestigkeit | 100 kPa |
| Rückprallelastizität | 59 % |
| DVR (90 %) | 6,5 % |

### Beispiel 4

| | Gew.-Teile |
|---|---|
| Polyetherpolyol B1 | 97,5 |
| Polyetherpolybl B2/4 | 2,5 |
| Stabilisator KS 67 | 0,5 |
| Diethanolamin (Komponente C) | 1,0 |
| Dabco® 33LV | 0,15 |
| Zinnoctoat | 0,15 |
| Wasser | 4,5 |
| Desmodur® T 80 | 45,2 |

Eigenschaften des HR-Schaumstoffs:

| | |
|---|---|
| Rohdichte | 21,5 kg/m³ |
| Stauchhärte | 0,9 kPa |
| Bruchdehnung | 65 % |
| Zugfestigkeit | 110 kPa |
| Rückprallelastizität | 58 % |
| DVR (90 %) | 8 % |

### Beispiel 5

| | Gew.-Teile |
|---|---|
| Polyetherpolyol B1 | 97,5 |
| Polyetherpolyol B2/4 | 2,5 |
| Stabilisator KS 67 | 0,5 |
| Diethanolamin | 0,5 |
| Dabco® 33LV | 0,2 |
| Zinnoctoat | 0,2 |
| Wasser | 3,0 |
| Desmodur® T 80 | 37,8 |

Eigenschaften des HR-Schaumstoffs:

| | |
|---|---|
| Rohdichte | 31,5 kg/m³ |
| Stauchhärte | 2,9 kPa |
| Bruchdehnung | 70 % |
| Zugfestigkeit | 110 kPa |
| Rückprallelastizität | 62 % |
| DVR (90 %) | 2,7 % |
| Wet-compression-set (75 %) | 3,3 % |

### Beispiel 6 (Vergleich)

| | Gew.-Teile |
|---|---|
| Polyetherpolyol E1 | 100 |
| Diethanolamin | 1,3 |
| Stabilisator KS 67 | 0,25 |
| Dabco® 33LV | 0,15 |
| Zinnoctoat | 0,15 |
| Wasser | 3,0 |
| Desmodur® T 80 | 40,6 |

Eigenschaften des HR-Schaumstoffs:

| | |
|---|---|
| Rohdichte | 31 kg/m³ |
| Stauchhärte | 2,4 kPa |
| Bruchdehnung | 130 % |
| Zugfestigkeit | 120 kPa |
| Rückprallelastizität | 59 % |
| DVR (90 %) | 6,7 % |
| Wet-compression-set (75 %) | 15,0 % |

Die Beispiele 1 bis 4 zeigen, daß sich erfindungsgemäß weiche HR-Schaumstoffe mit hoher Elastizität und geringem Druckverformungsrest herstellen lassen. Mit Füllstoffpolyolen hingegen werden auf der Basis von Wasser schlechtere Elastizitäten und höhere Druckverformungsreste erzielt. Vergleichbare Werte wie in den Beispielen 1 bis 4 sind hier nur in Kombination Wasser/R11 erreichbar und können nun erfindungsgemäß mit Wasser allein erreicht werden.

Durch Verwendung der höherfunktionellen Polyetherpolyole B2 kann deren Aufwandmenge gegenüber Beispiel 1 auf die Hälfte reduziert werden, zudem werden bessere mechanische Eigenschaften erzielt. Die Verschäumungssicherheit ist größer als in Beispiel 1. Die vierfache Dosierung führt hier noch nicht zum Kollaps. Gegenüber dem Füllstoffpolyol in Beispiel 6 resultiert in Beispiel 5 ohne die bisher erforderlichen Füllstoffe sogar noch ein härterer Schaumstoff, der zudem noch bessere mechanische Eigenschaften nach Feuchtalterung zeigt.

## Patentansprüche

1. Verfahren zur Herstellung hochelastischer Polyurethanschaumstoffe durch Umsetzung von
A) Polyisocyanaten mit
B) Verbindungen mit mindestens zwei gegenüber Isocyanaten reaktionsfähigen Wasserstoffatomen von einem Molekulargewicht von 500 bis 10 000 und
C) Verbindungen der allgemeinen Formel 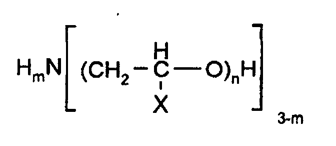 in welcher
m eine ganze Zahl zwischen 0 und 2
n eine ganze Zahl zwischen 1 und 3
x Wasserstoff oder eine Methylgruppen bedeutet, und gegebenenfalls
C1) weiteren Verbindungen mit mindestens zwei gegenüber Isocyanaten reaktionsfähigen Wasserstoffatomen und einem Molekulargewicht von 32 bis 499 in Gegenwart von
D) Wasser und/oder leicht flüchtigen organischen Treibmitteln sowie gegebenenfalls in Gegenwart von
E) füllstoffhaltigen Polyolen vom Typ der SAN-, PHD- und PIPA-Polyole und
F) an sich bekannten Hilfs- und Zusatzmitteln,
**dadurch gekennzeichnet, daß** als Komponente B) ein Polyolgemisch verwendet wird, das
B1) mindestens ein Polyetherpolyol der Funktionalität 3,5 bis 8, mit überwiegend primären OH-Gruppen sowie einem Ethylenoxidgehalt von 10 bis 30 Gew.-%, sowie einem Äquivalentgewicht von 500 bis 4 000 und
B2) mindestens ein Ester-, Urethan- und/oder Harnstoffgruppen enthaltendes Polyetherpolyol der Funktionalität 2 bis 8, mit überwiegend primären OH-Gruppen und einem Ethylenoxidgehalt von 50 bis 95 Gew.-% sowie einem Äquivalentgewicht von 200 bis 3 000, enthält.

2. Verfahren nach Anspruch 1, **dadurch gekennzeichnet, daß** als Starter für die Polyole B1) solche der Funktionalität 3,5 bis 8, verwendet werden.

3. Verfahren nach Anspruch 1, **dadurch gekennzeichnet, daß** die Polyole B2) eine Funktionalität von 3 bis 8, haben.

4. Verfahren nach einem der Ansprüche 1 bis 3, **dadurch gekennzeichnet, daß** die Polyole B1) in Mengen von 80 bis 99 Gew.-% und die Polyole B2) in Mengen von 1 bis 20 Gew.-%, bezogen auf die Komponente B), verwendet werden.

5. Verfahren nach einem der Ansprüche 1 bis 4, **dadurch gekennzeichnet, daß** zur Härtesteigerung des Schaumstoffs Füllstoffpolyole E) mitverwendet werden.

6. Verfahren nach einem der Ansprüche 1 bis 5, **dadurch gekennzeichnet, daß** als Komponente C) Vernetzer vom Alkanolamintyp mitverwendet werden.

7. Füllstoff-freie weiche und hochelastische Polyurethanschaumstoffe erhältlich nach einem der Ansprüche 1 bis 6.

## Claims

1. Process for the preparation of highly elastic polyurethane foams by reacting
A) polyisocyanates with
B) compounds having at least two isocyanate-reactive hydrogen atoms with a molecular weight of 500 to 10,000 and
C) compounds having the general formula 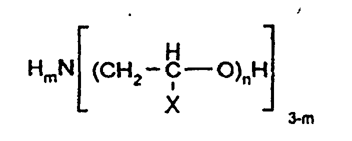 in which
m denotes a whole number between 0 and 2
n denotes a whole number between 1 and 3
x denotes hydrogen or a methyl group, and optionally
Cl) other compounds having at least two isocyanate-reactive hydrogen atoms and a molecular weight of 32 to 499 in the presence of
D) water and/or highly volatile organic blowing agents and optionally in the presence of
E) filler-containing polyols of the SAN, PHD and PIPA polyol type and
F) auxiliary substances and additives known per se,
**characterised in that** as component B) a polyol blend is used that contains
B1) at least one polyether polyol having a functionality of 3.5 to 8, with predominantly primary OH groups and an ethylene oxide content of 10 to 30 wt.% and an equivalent weight of 500 to 4000 and
B2) at least one polyether polyol containing ester, urethane and/or urea groups and having a functionality of 2 to 8, with predominantly primary OH groups and an ethylene oxide content of 50 to 95 wt.% and an equivalent weight of 200 to 3000.

2. Process according to claim 1, **characterised in that** as starters for the polyols B1) examples having a functionality of 3.5 to 8 are used.

3. Process according to claim 1, **characterised in that** the polyols B2) have a functionality of 3 to 8.

4. Process according to one of claims 1 to 3, **characterised in that** the polyols B1) are used in quantities of 80 to 99 wt.% and the polyols B2) in quantities of 1 to 20 wt.%, relative to component B).

5. Process according to one of claims 1 to 4, **characterised in that** filler polyols E) are additionally used to increase the hardness of the foam.

6. Process according to one of claims 1 to 5, **characterised in that** crosslinking agents of the alkanolamine type are additionally used as component C).

7. Filler-free flexible and highly elastic polyurethane foams obtainable according to one of claims 1 to 6.

## Revendications

1. Procédé de fabrication de mousses de polyuréthanne à grande élasticité par réaction de :
A) polyisocyanates avec
B) des composés comportant au moins deux atomes d'hydrogène aptes à réagir avec des isocyanates, d'un poids moléculaire de 500 à 10 000, et
C) des composés de formule générale 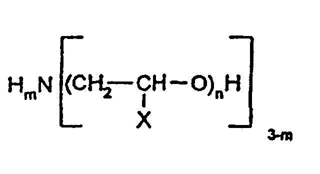 dans laquelle
m est un nombre entier entre 0 et 2
n est un nombre entier entre 1 et 3
x signifie un hydrogène ou un groupement méthyle, et le cas échéant
C1 d'autres composés comportant au moins deux atomes d'hydrogène aptes à réagir avec des isocyanates et d'un poids moléculaire de 32 à 499 en présence de
D) eau et/ou d'agents moussants organiques facilement volatiles, ainsi que, le cas échéant en présence de
E) polyols contenant des charges, des types de polyols SAN, PHD et PIPA, et
F) d'adjuvants et d'auxiliaires connus en soi,
**caractérisé en ce qu'**on utilise comme composant B) un mélange de polyols qui contient
B1) au moins un polyétherpolyol de fonctionnalité 3,5 à 8, comportant principalement des groupements OH primaires, ainsi qu'une teneur en oxyde d'éthylène de 10 à 30% en poids, ainsi qu'un poids équivalent de 500 à 4 000, et
B2) au moins un polyétherpolyol de fonctionnalité 2 à 8 contenant au moins des groupements ester, uréthanne et/ou urée, comportant principalement des groupements OH primaires et une teneur en oxyde d'éthylène de 50 à 95% en poids, ainsi qu'un poids équivalent de 200 à 3 000.

2. Procédé selon la revendication 1, **caractérisé en ce qu'**on utilise comme amorceur des polyols B1) ceux de fonctionnalité 3,5 à 8.

3. Procédé selon la revendication 1, **caractérisé en ce que** les polyols B2) ont une fonctionnalité de 3 à 8.

4. Procédé selon l'une des revendications 1 à 3, **caractérisé en ce que** les polyols B1) sont utilisés en quantités de 80 à 99% en poids et que les polyols B2) le sont en quantités de 1 à 20% en poids, sur base du composant B).

5. Procédé selon l'une des revendications 1 à 4, **caractérisé en ce que**, pour augmenter la dureté de la mousse, on utilise conjointement des polyols de charge E).

6. Procédé selon l'une des revendications 1 à 5, **caractérisé en ce qu'**on utilise conjointement comme composant C) des agents de réticulation de type alcanolamine.

7. Mousses de polyuréthanne exemptes de charge, souples et à grande élasticité, pouvant s'obtenir selon l'une des revendications 1 à 6.
